# EUROPÄISCHE PATENTSCHRIFT

(11) **EP 1 151 525 B1**
(45) Veröffentlichungstag und Bekanntmachung des Hinweises auf die Patenterteilung: **04.02.2004**
(21) Anmeldenummer: 99944615.6
(22) Anmeldetag: 07.09.1999
(51) Int. Cl.: H02M 7/48

(54) **WECHSELRICHTER FÜR DIE EINSPEISUNG SINUSFÖRMIGER STRÖME IN EIN WECHSELSTROMNETZ**
INVERTER FOR INJECTING SINUSOIDAL CURRENTS INTO AN ALTERNATING CURRENT NETWORK
ONDULEUR POUR L'INJECTION DE COURANTS SINUSOIDAUX DANS UN RESEAU A COURANT ALTERNATIF

(30) Priorität: 24.09.1998 DE 19843692
(43) Veröffentlichungstag der Anmeldung: 07.11.2001
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP1999/006565
(87) Internationale Veröffentlichungsnummer: WO 2000/017995

(56) Entgegenhaltungen:
- EP-A- 0 819 563
- US-A- 4 555 754

## Beschreibung

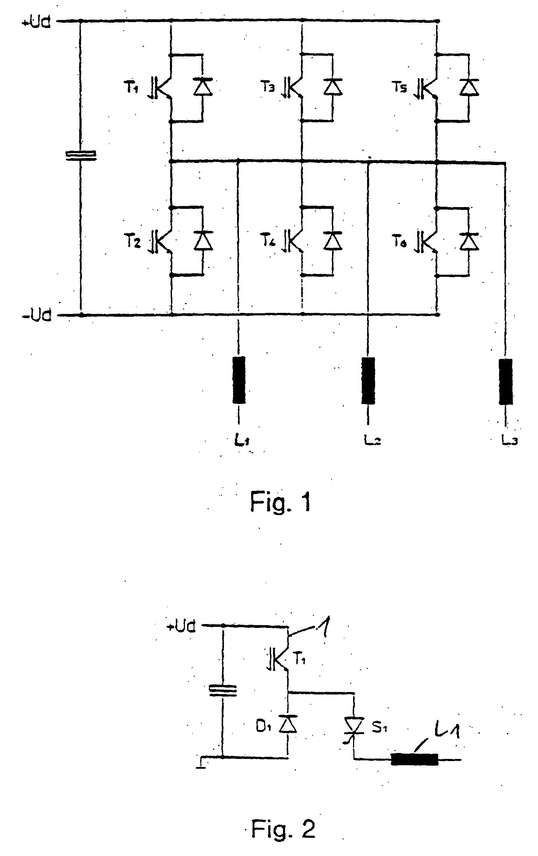

Die Erfindung betrifft einen Wechselrichter für die Einspeisung sinusförmiger Ströme in ein Wechselstromnetz bzw. in ein öffentliches Stromversorgungsnetz. Ein solcher Wechselrichter ist aus der US 5 459 655 bekannt geworden. Bei solchen Wechselrichtern werden fast ausschließlich Leistungsschalter in der konfiguration einer Drehstrombrücke - wie in Fig. 1 gezeigt - ausgeführt. Ein solcher Wechselrichter erzeugt aus einer Gleichstrom/Spannungsquelle einen Mehrphasenwechselstrom mit den Phasen U, V und W. Durch die in Fig. 1 gezeigte Antiparallelschaltung der Leistungsschalter T1 bis T6 mit entsprechenden Dioden ist ein Vierquadrantenbetrieb möglich und somit ist eine solche Wechselrichterschaltung sehr vielseitig einsetzbar.

Nachteilig ist bei einer solchen Wechselrichterschaltung, daß im Falle eines Querkurzschlusses von zwei Schaltern, z.B. T1 und T2 sich extrem hohe Energieflüsse einstellen, was regelmäßig zur völligen Zerstörung des Wechselrichters und möglicherweise zum Ausbruch eines Brandes und somit zur Zerstörung aller angeschlossenen Anlagenteile führt. Ferner ist es nachteilig, daß mit der Erhöhung der Gleichspannung die jeweiligen Bauteile eine immer höhere Güte aufweisen müssen, was nur mit sehr teuren Bauteilen möglich ist.

Es ist Aufgabe der vorliegenden Erfindung, die Kurzschlußfestigkeit eines Wechselrichters zu verbessern und gleichzeitig die vorbeschriebenen Nachteile zu vermeiden und insbesondere den Bedarf von teuren Einzelbauteilen soweit wie möglich zu vermeiden.

Die Aufgabe wird erfindungsgemäß mit einem Wechselrichter mit den Merkmalen nach einem der Ansprüche 1 und 2 gelöst. Vorteilhafte Weiterbildungen sind in den Unteransprüchen beschrieben.

Der Erfindung liegt die Erkenntnis zugrunde, daß für die Erzeugung einer Halbschwingung einer Sinusschwingung nur eine einzige Schaltungseinheit zu verwenden. Für die Erzeugung einer positiven Halbschwingung einer Sinusschwingung wird somit eine andere Schaltungseinheit verwendet als für die Erzeugung des negativen Teils des Sinusstroms. Dies hat zur Folge, daß die Schaltungseinheiten zur Erzeugung der positiven Halbschwingung wie auch der negativen Halbschwingung des Sinusstroms voneinander getrennt sind und lediglich über den gemeinsamen Stromabgriff zusammengeschaltet sind, wobei die Erzeugung des Stroms in einem Schaltungsteil nicht um den anderen Schaltungsteil hineinwirken kann, weil jeder Schaltungsteil durch einen Schalter im Stromabgriffweg gegenüber dem anderen geschützt ist.

Durch die Aufteilung des sinusförmigen Ausgangsstromes des Wechselrichters in eine positive und negative Halbschwingung besteht die Möglichkeit, die Gleichspannungsversorgung auf die beiden Schaltungsteile für die negative und positive Halbschwingung aufzuteilen. Es kann somit der Teil des Wechselrichters, welcher die positive Halbschwingung erzeugt mit einer Gleichspannung, z.B. U_{d1} = 660 Volt und der Schaltungsteil des Wechselrichters, welcher die negative Halbschwingung des Sinusstroms erzeugt, ebenfalls mit einer Gleichspannung, z.B. U_{d2} = 660 Volt betrieben wenden. Als gesamte Gleichspannung erhält man dann das doppelte der einzelnen Gleichspannung, also 1320 Volt. Daraus resultiert eine doppelte Ausgangsleistung des gesamten Wechselrichters, bei Einsatz von Bauteilen, die nur für eine Gleichspannung von 660 V angelegt ist.

Die Ausgangsinduktivitäten der einzelnen Schaltungseinheiten des Wechselrichters werden ebenfalls, z.B. während des positiven Stromanteils nur mit der Teilgleichspannung U_{d1} beaufschlagt und nicht mit der gesamten Gleichspannung U_{d1} + U_{d2}. Hieraus resultiert ebenfalls eine Material- und Kosteneinsparung. Durch die Erzeugung einer Halbschwingung einer Sinusschwingung mit einer einzigen Schaltungseinheit können die Schaltungseinheiten für unterschiedliche Halbschwingungen auch räumlich voneinander entfernt angeordnet werden, was insgesamt die Sicherheit des Wechselrichters und aller Schaltungsanlagenteile verbessert und auch die räumliche Unterbringung erheblich vereinfacht. Ein besonderer Vorteil des erfindungsgemäßen Wechselrichterkonzepts besteht darin, daß die induktivität der Ausgangsdrossel und damit die hierfür notwendigen Bauteilkosten halbiert werden können.

Die Erfindung ist nachfolgend anhand eines zeichnerisch dargestellten Ausführungsbeispieles näher erläutert. In der Zeichnung stellen dar:
- Fig. 1: Grund-Prinzip eines bekannten Wechselrichters;
- Fig. 2: Schaltungsteil für die positive Halbschwingung des Sinus-Ausgangsstroms;
- Fig. 3: Schaltungsteil für die negative Halbschwingung des Sinus-Ausgangsstroms;
- Fig. 4: Zeitdiagramm des Sinus-Ausgangsstroms mit den in Figur 2 und 3 dargstellten Schaltern T1, S1, T2, S2;
- Fig. 5: Schaltbild eines erfindungsgemäßen dreiphasigen Wechselrichters;
- Fig. 6: Grundprinzip-Schaltbild einer Zusammenschaltung von mehreren Schaltungsteilen nach Figur 2 und 3 zur Erzeugung eines Dreiphasenwechseistroms;
- Fig. 7: Schaltbild des Wechselrichters für eine einzige Phase.

Fig. 2 zeigt ein Schaltbild eines Querzweiges bzw. einer Schaltungseinheit 1 zur Erzeugung des positiven Anteils des Wechsel- bzw. Drehstromnetzstromes aus einer Gleichspannung U_{d}. Die Schaltungseinheit 1 besteht aus einem Leistungstransistor T1 als erstem Schalter, z.B. einem IGBT (isolated gate bipolar transistor) oder GTO (gate turn off thyristor) und einer Diode D1, welche in Reihe mit dem Leistungsschalter T1 an den Gleichspannungsanschluß gelegt ist. Der Stromabgriff für den Ausgangsstrom liegt zwischen dem Leistungsschalter T1 und der Diode D1. Im Stromabgriff liegt ein zweiter Schalter S1, welcher seinerseits wiederum in Reihe mit einer Ausgangsinduktivität L1 geschaltet ist. Fig. 2 zeigt im Grundprinzip ein Schaltbild einer Schaltungseinheit zur Erzeugung des negativen Teils des Wechsel- bzw. Drehstromnetzstromes mit dem reziproken Aufbau zur Schaltung nach Fig. 2.

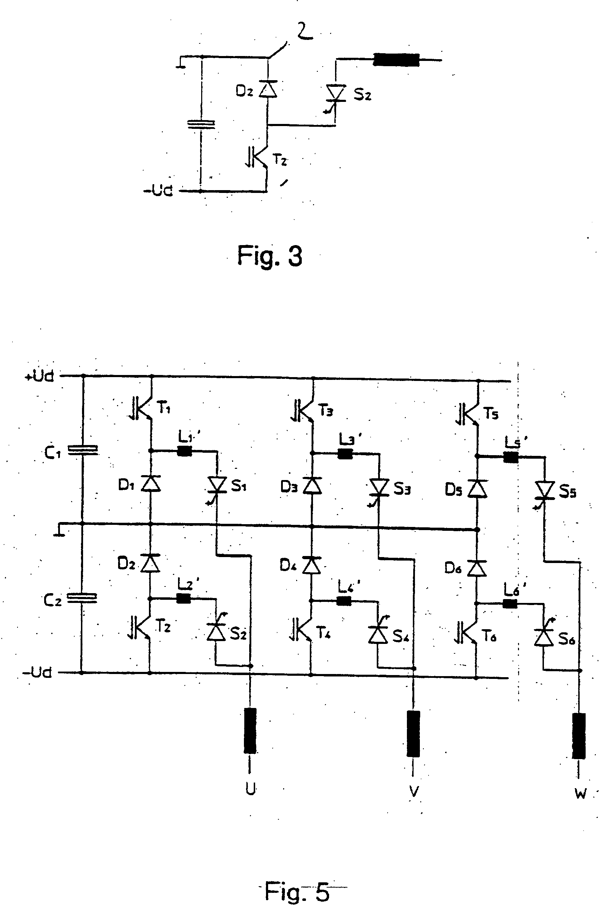

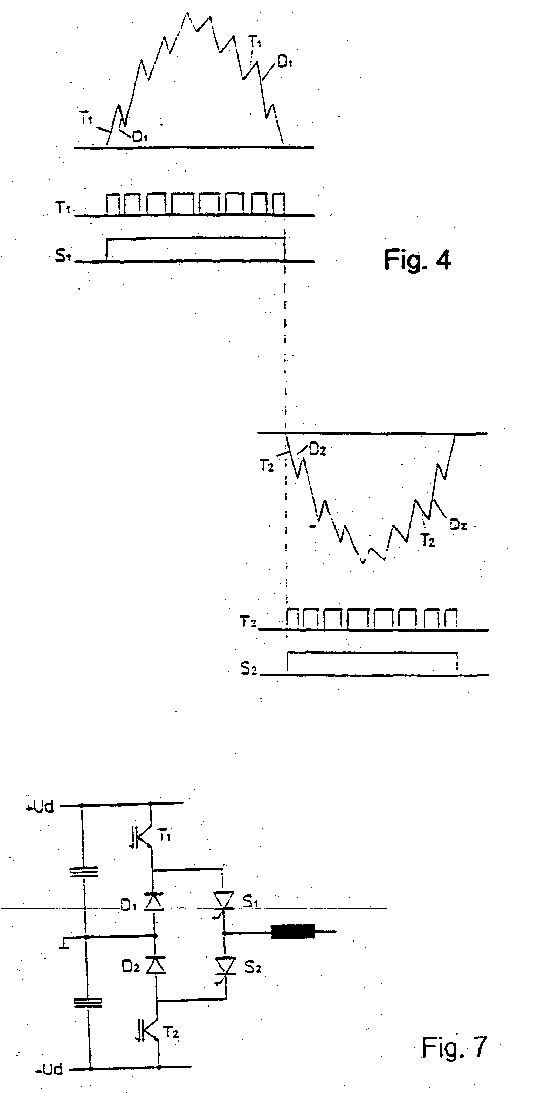

Fig. 4 zeigt das Zeitdiagramm des Sinus-Ausgangsstroms mit den in Fig. 2 und 3 dargestellten Schaltungseinheiten 1 und 2. Darüber hinaus ist der zeitliche Einschaltverlauf der Leistungsschalter T1 und T2 ebenso dargestellt wie der Einschalt-/Ausschaltverlauf der im Stromabgriff geordneten Schalter S1 und S2. Während der positiven Halbwelle des Sinusstroms (Fig. 4, links oben) wird nur der Leistungsschalter T1 in einem vorgeschriebenen Taktverlauf an- und ausgeschaltet, während in dieser Phase der Leistungsschalter T2 ausgeschaltet ist. Während der Erzeugung der positiven Halbwelle des Sinusstroms ist der im Stromabgriff angeordnete Schalter S1 eingeschaltet (geschlossen), während zur gleichen Zeit der andere Schalter S2 im Stromabgriff für die negative Halbwelle abgeschaltet (geöffnet) ist. Durch Taktung der An- und Ausschaitzustände des Leistungsschalters T1 und den Einfluß der Diode D1 wird ein "gezackter" Sinusstrom erzeugt. Während der Erzeugung der negativen Halbwelle des Sinusstroms sind die Verhältnisse genau umgekehrt wie für die Erzeugung der positiven Halbweile des Sinusstroms. Bei der Erzeugung der negativen Halbwelle ist der Schalter S1 abgeschaltet, während der Leistungsschalter T2 in einem vorbeschriebenen Taktverlauf an- und ausgeschaltet wird, und der Schalter S2 stets angeschaltet ist. Im Bereich des Strommaximums einer Sinuswelle sind die Leistungsschalter T1 bzw. T2 für längere Zeit angeschaltet als im Bereich niedrigerer Strompegel, insbesondere im Bereich der Nulldurchgänge.

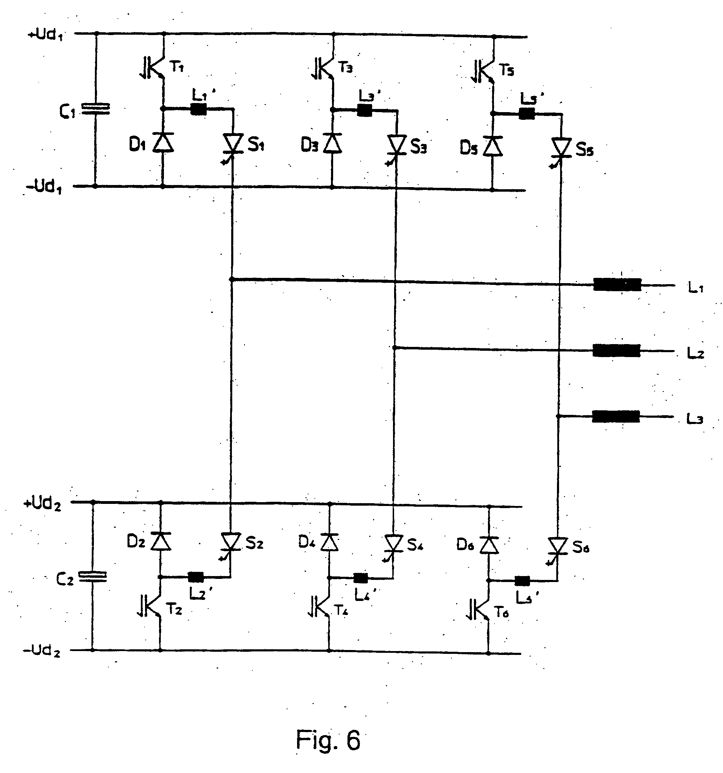

Fig. 5 und 6 zeigen die Zusammenschaltung mehrerer der in Fig. 2 und 3 dargestellten Schaltungseinheiten zu einem erfindungsgemäßen Wechselrichter, welcher einen Dreiphasenwechselstrom erzeugt. Der Unterschied zwischen den dargestellten Schaltungen besteht darin, daß in Fig. 6 die Schaltungsteile zur Erzeugung der negativen Halbschwingung des Ausgangsstroms getrennt angeordnet sind von den Schaltungsteilen für die positive Halbschwingung des AusgangsStroms. Eine getrennte Anordnung kann hierbei auch bedeuten, daß die Schaltungsteile in unterschiedlichen Räumen liegen und lediglich über ihre gemeinsamen Stromabgriffe verbunden sind. Die Schaltungseinheiten zur Erzeugung der positiven Halbwelle liegen an den Gleichspannungsanschlüssen + U_{d1} und -U_{d 1} . Die Schaltungsteile zur Erzeugung der negativen Halbwelle des Sinusstroms liegen an den Gleichspannungsanschlüssen + U_{d2} und -U_{d2}.

Fig. 1 zeigt das Schaltbild eines bekannten Wechselrichters, welcher durch die Antiparallelschaltung der Leistungsschalter mit der Diode einen Vierquadrantenbetrieb ermöglicht und somit als Schaltung sehr vielseitig einsetzbar ist, im Falle eines Querkurzschlusses von zwei Schaltern, z.B. T1 und T2 jedoch das sehr hohe Risiko eines harten Kurzschlusses aufweist, welcher zur vollständigen Zerstörung des Wechselrichters und möglicherweise auch einen Brandausbruch zur vollständigen Zerstörung aller anliegenden Anlagenteile führen kann. Zur Erzeugung der positiven Halbwelle des Ausgangsstromes wird bei dem bekannten Wechselrichter eine aufeinanderfolgende Ein- und Ausschaltung der Schalter T1 und T2 vorgenommen. Für eine Halbwelle bedeutet dies, daß mehrmals während der Halbwelle aufeinanderfolgend T1 und T2 an- bzw. ausgeschaltet werden, was schon statistisch die Wahrscheinlichkeit eines Querkurzschlusses deutlich gegenüber der erfindungsgemäßen Lösung gemäß Fig. 5 bzw. 6 erhöht.

Fig. 7 zeigt die Zusammenschaltung eines Schaltungsteils für die positiven Halbschwingungen des Ausgangsstroms mit einem Schaltungsteil für die negativen Halbschwingungen des Ausgangsstroms für eine der drei Phasen.

Durch die getrennten Stromzweige, positiver und negativer Querzweig - siehe Fig. 2-7 - werden bei der Zusammenschaltung der einzelnen Schaltungeinheiten - siehe Fig. 5-7 - harte Kurzschlüsse prinzipiell verhindert. Sollte es dennoch zu Fehlschaltungen der Leistungsschalter in den unterschiedlichen Schaltungsteilen kommen, so sind diese nicht nur über die Induktivitäten L1'-L6', L1-L6 gegeneinander entkoppelt und geschützt, sondern ein Kurzschluß wird maßgeblich auch dadurch unmöglich gemacht, daß die im Stromabgriff angeordneten Schalter S1-S6 eine Rückwirkung eines Zweiges in den anderen durch ihre gegenläufige An- bzw. Ausschaltung verhindert. Mit dem dargestellten Wechselrichterkonzept gemäß Fig. 2-7 lassen sich Wechselrichter mit einer sehr hohen Leistung aufbauen. Die Entkopplungsdrosseln L1'-L6' zwischen den Stromabgriffen von zwei zusammengeschalteten Schaltungseinheiten können gleichzeitig als Hochfrequenzdrossel und auch als Filter für eine dU/dt-Reduzierung genutzt werden. Damit ist eine Störstrahlung bereits direkt hinter den Leistungsschaltern T1-T6 drastisch reduziert.

Der vorstehend beschriebene Wechselrichter ist insbesondere für Windenergiekonverter oder ein anderes elektrischen Gleichstrom bereitstellendes Elektrizitätswerk (z.B. Solarkraftwerk) geeignet. Bei einem Windenergiekonverter erzeugt der Generator regelmäßig einen Gleichstrom, oder der Generator erzeugt einen Wechselstrom, welcher dann jedoch gleichgerichtet, werden muß, um mittels des vorbeschriebenen Wechselrichters in einen Netzstrom/Netzspannung umgewandelt werden kann. Zur Bereitstellung einer exakten Sinusform des Ausgangsstroms ist es vorteilhaft, wenn die Ein-/Ausschaltfrequenz der Leistungsschalter T1 (bei positiver Halbwelle) bzw. T2 (bei negativer Halbwelle) im Nulldurchgang erheblich höher ist als im Bereich der Strommaxima. Im Bereich der Strommaxima beträgt die Ein-/Ausschaltfrequenz der Leistungsschalter T1 bzw. T2 einige 100 Hz (z.B. im Bereich zwischen 100 und 600 Hz). Im Bereich der Nulldurchgänge beträgt die Ein/Ausschaltfrequenz der Leistungsschalter einige kHz (z.B. zwischen 5 und 1 8 kHz).

## Patentansprüche

1. Wechselrichter für die Einspeisung sinusförmiger Ströme in ein Wechselstromnetz mit:
a) einer Schaltungseinheit (1), die den positiven Teil des Netzstromes erzeugt;
b) die Schaltungseinheit weist einen ersten Schalter (T1, T3, T5) und eine damit in Reihe geschaltete Diode (D1, D3, D5) auf und der Stromabgriff liegt zwischen dem ersten Schalter (T1, T3, T5) und der Diode (D1, D3, D5);
c) im Stromabgriff liegt ein zweiter Schalter (S1, S3, S5), welcher während der Erzeugung des positiven Teils des Netzstroms geschlossen ist;
d) im Stromabgriff ist eine Entkopplungsinduktivität (L1'-L6') vorgesehen.

2. Wechselrichter für die Einspeisung sinusförmiger Ströme in ein Wechselstromnetz mit:
a) einer Schaltungseinrichtung (2), die den negativen Teil des Netzstromes erzeugt;
b) die Schaltungseinheit weist einen dritten Schalter (T2, T4, T6) und eine damit in Reihe geschaltete Diode (D2, D4, D6) auf und der Stromabgriff liegt zwischen dem Schalter (T2, T4, T6) und der Diode (D2, D4, D6);
c) im Stromabgriff liegt ein vierter Schalter (S2, S4, S6) welcher während der Erzeugung des negativen Teils des Netzstroms geschlossen ist;
d) im Stromabgriff ist eine Entkopplungsinduktivität (L1'-L6') vorgesehen.

3. Wechselrichter für die Einspeisung sinusförmiger Ströme in ein Wechselstromnetz nach Anspruch 1 und 2, bei der beide Schaltungseinheiten (1, 2) parallel zueinander geschaltet sind.

4. Wechselrichter nach einem der vorhergehenden Ansprüche,
**dadurch gekennzeichnet, daß** die ersten und zweiten Schaltungseinheiten nach Anspruch 1 und 2 in getrennten Räumen aufgebaut sind.

5. Wechselrichter nach einem der vorhergehenden Ansprüche,
**dadurch gekennzeichnet, daß** zur Erzeugung einer Halbschwingung einer Sinusschwingung jeweils nur der erste oder zweite Schalter (T1, T2) einer Schaltungseinheit (1, 2) mehrfach an- und ausgeschaltet wird.

6. Wechselrichter nach einem der vorhergehenden Ansprüche,
**dadurch gekennzeichnet, daß** der zweite (oder vierte) Schalter im Stromabgriff nur dann geöffnet ist, wenn der vierte (oder zweite) Schalter im Stromabgriffsweg geschlossen ist.

7. Wechselrichter nach einem der vorhergehenden Ansprüche,
**dadurch gekennzeichnet, daß** mehrere erste und zweite Schaltungseinheiten nach Anspruch 1 und 2 über ihren Stromabgriff miteinander verbunden sind, um den Strom einer einzigen Phase (U, V, W) eines Drehstromnetzes bereitzustellen.

8. Windenergiekonverter oder ein anderes elektrischen Gleichstrom bereitstellendes Elektrizitätswerk mit einem Wechselrichter nach einem der vorhergehenden Ansprüche.

## Claims

1. Inverter for feeding sinusoidal currents into an alternating current network having:
a) a switching unit (1) which produces the positive portion of the network current;
b) the switching unit has a first switch (T1, T3, T5) and connected in series thereto a diode (D1, D3, D5) and the current tap is located between the first switch (T1, T3, T5) and the diode (D1, D3, D5);
c) located in the current tap is a second switch (S1, S3, S5) which is closed during the production of the positive portion of the network current;
d) in the current tap a decoupling inductor (L1'-L6') is provided.

2. Inverter for feeding sinusoidal currents into an alternating current network having:
a) a switching device (2) which produces the negative portion of the network current;
b) the switching unit has a third switch (T2, T4, T6) and connected in series thereto a diode (D2, D4, D6) and the current tap is located between the switch (T2, T4, T6) and the diode (D2, D4, D6);
c) located in the current tap is a fourth switch (S2, S4, S6) which is closed during the production of the negative portion of the network current;
d) in the current tap a decoupling inductor (L1'-L6') is provided.

3. Inverter for feeding sinusoidal currents into an alternating current network according to Claim 1 and 2 in which both switching units (1, 2) are connected in parallel to one another.

4. Inverter according to any of the preceding claims, **characterised in that** the first and second switching units according to Claim 1 and 2 are constructed in separate spaces.

5. Inverter according to any of the preceding claims, **characterised in that** for producing a half cycle of a sine wave only the first or second switch (T1, T2) of a switching unit (1, 2) is switched on and off multiple times in each case.

6. Inverter according to any of the preceding claims, **characterised in that** the second (or fourth) switch in the current tap is opened only when the fourth (or second) switch in the current tapping line is closed.

7. Inverter according to any of the preceding claims, **characterised in that** a plurality of first and second switching units according to Claim 1 and 2 are connected to one another via their current tap in order to provide the current of a single phase (U, V, W) of a three-phase network.

8. Wind energy converter or other electricity plant providing direct current having an inverter according to any of the preceding claims.

## Revendications

1. Onduleur pour l'injection de courants sinusoïdaux dans un réseau à courant alternatif avec :
a) une unité de commutation (1), qui génère la partie positive du courant de réseau ;
b) l'unité de commutation présente un premier commutateur (T1, T3, T5) et une diode (D1, D3, D5) qui lui est connectée en série et la sortie de courant se situe entre le premier commutateur (T1, T3, T5) et la diode (D1, D3, D5) ;
c) la sortie de courant comprend un deuxième commutateur (S1, S3, S5) qui est fermé lors de la génération de la partie positive du courant de réseau ;
d) une inductance de découplage (L1'-L6') est prévue dans la sortie de courant.

2. Onduleur pour l'injection de courants sinusoïdaux dans un réseau à courant alternatif avec :
a) une unité de commutation (2), qui génère la partie négative du courant de réseau ;
b) l'unité de commutation présente un troisième commutateur (T2, T4, T6) et une diode (D.2, D4, D6) qui lui est connectée en série et la sortie de courant se situe entre le commutateur (T2, T4, T6) et la diode (D2, D4, D6) ;
c) la sortie de courant comprend un quatrième commutateur (S2, S4, S6) qui est fermé lors de la génération de la partie négative du courant de réseau ;
d) une inductance de découplage (L1'-L6') est prévue dans la sortie de courant.

3. Onduleur pour l'injection de courants sinusoïdaux dans un réseau à courant alternatif selon les revendications 1 et 2, pour lequel les deux unités de commutation (1, 2) sont connectées en parallèle l'une par rapport à l'autre.

4. Onduleur selon l'une quelconque des revendications précédentes, **caractérisé en ce que** les première et deuxième unités de commutation selon les revendications 1 et 2 sont installées dans des espaces séparés.

5. Onduleur selon l'une quelconque des revendications précédentes, **caractérisé en ce que** respectivement seul le premier ou le deuxième commutateur (T1, T2) d'une unité de commutation (1, 2) est connecté et déconnecté de façon répétée pour générer une demi-période d'une oscillation sinusoïdale.

6. Onduleur selon l'une quelconque des revendications précédentes, **caractérisé en ce que** le deuxième (ou quatrième) commutateur de la sortie de courant n'est ouvert que si le quatrième (ou deuxième) commutateur dans la voie de la sortie de courant est fermé.

7. Onduleur selon l'une quelconque des revendications précédentes, **caractérisé en ce que** plusieurs premières et deuxièmes unités de commutation selon les revendications 1 et 2 sont reliées les unes aux autres via leur sortie de courant afin de mettre à disposition le courant d'une seule phase (U, V, W) d'un réseau à courant triphasé.

8. Convertisseur d'énergie éolienne ou centrale électrique mettant à disposition un autre courant continu électrique avec un onduleur selon l'une quelconque des revendications précédentes.
